Europäisches Patentamt

European Patent Office

Office européen des brevets

(11) Numéro de publication : **0 504 021 A1**

# (12) DEMANDE DE BREVET EUROPEEN

(21) Numéro de dépôt : **92400586.1**

(51) Int. Cl.⁵ : **H04N 5/20**

(22) Date de dépôt : **06.03.92**

(30) Priorité : **12.03.91 FR 9102954**

(43) Date de publication de la demande :
**16.09.92 Bulletin 92/38**

(84) Etats contractants désignés :
**DE FR GB**

(71) Demandeur : **THOMSON-CSF**
**51, Esplanade du Général de Gaulle**
**F-92800 Puteaux (FR)**

(72) Inventeur : **Couturier, Alain**
**THOMSON-CSF, SCPI, Cédex 67**
**F-92045 Paris la Défense (FR)**

(74) Mandataire : **Chaverneff, Vladimir**
**THOMSON-CSF SCPI**
**F-92045 PARIS LA DEFENSE CEDEX 67 (FR)**

(54) **Procédé d'augmentation du contraste d'un générateur d'images synthétiques et générateur de mise en oeuvre.**

(57) Afin d'améliorer le contraste d'un générateur d'images synthétiques, on supprime les compressions de luminance habituellement mises en oeuvre, on effectue un calcul de luminosité vraie, on inclut la fonction d'adaptation de l'oeil en calculant l'énergie lumineuse vraie de sortie, on intègre cette énergie en fonction du temps, et on normalise les composantes vidéo du signal envoyé au sytème de visualisation en fonction de l'énergie lumineuse de l'image visualisée et de la dynamique possible de la restitution d'image.

FIG.2

La présente invention se rapporte au procédé d'augmentation du contraste d'un générateur d'images synthétiques, et à un générateur de mise en oeuvre de ce procédé.

Les images produites par les générateurs d'images synthétiques, tels que ceux utilisés dans des simulateurs, en combinaison, en particulier, avec des dispositifs du type à projection à grand champ, présentent souvent un manque de luminosité ou de contraste. Ceci est dû au fait que le système générateur d'image compresse la dynamique de calcul des luminosités de l'image sans simuler l'adaptation naturelle de l'oeil .

La présente invention a pour objet un procédé permettant d'augmenter le contraste des images produites par un générateur d'images synthétiques fonctionnant en temps réel, procédé qui soit simple à mettre en oeuvre et fasse appel à des moyens peu onéreux.

La présente invention a également pour objet un générateur mettant en oeuvre ce procédé.

Le procédé de l'invention est caractérisé par le fait que l'on produit des images avec une dynamique sensiblement égale à la dynamique vraie de l'oeil, et que l'on envoie au système de restitution d'images un signal dont la dynamique de luminance instantanée est sensiblement égale à la dynamique instantanée statique de l'oeil. Avantageusement, la position de la dynamique de luminance instantanée dudit signal varie avec une constante de temps sensiblement égale à celle de l'oeil.

La présente invention sera mieux comprise à la lecture de la description détaillée d'un mode de mise en eouvre pris à titre d'exemple non limitatif et illustré par le dessin annexé, sur lequel :

– les figures 1 et 2 sont des diagrammes explicatifs se rapportant respectivement à un procédé de l'art antérieur et au procédé de l'invention ;

– la figure 3 est un bloc diagramme d'un générateur d'images synthétiques conforme à l'invention ; et

– la figure 4 est un bloc diagramme d'un générateur d'images synthétiques conforme à l'invention et utilisable dans un système multi-fenêtres.

L'oeil s'adapte en permanence à son environnement lumineux. En première analyse, on peut considérer que ce processus d'adaptation de l'oeil peut se résumer par deux paramètres temporellement différents.

Le premier est la dynamique instantanée statique de l'oeil ($D_{obs}$ ). Cette grandeur varie entre 100 et 1000. Elle est, pour un observateur moyen, d'environ 200 (soit 8 bits). Cela signifie que pour une ambiance oculaire moyenne et constante l'oeil perçoit simultanément des luminosités de $L_{max}$ à $L_{max}/200$. C'est dans ce cas que le contraste perçu est maximal et que l'observateur ressent un sentiment de "résolution". Ce paramètre est significatif d'une observation statique ou faiblement mobile. L'oeil intègre alors l'énergie qu'il reçoit et s'y adapte.

Lorsque l'oeil se déplace ou lorsque les conditions d'éclairage changent, sa sensibilité aux conditions d'éclairement se modifie et fait intervenir un second paramètre : sa dynamique vraie ($D_{scene}$), autrement dit, celle de $L_{max}$. En théorie cette dynamique est très élevée et atteint $10^8$ (24 bits), à savoir depuis une luminosité d'environ $10^{-2}$ à $10^{-3}$ lux, correspondant à la limite d'appréciation des formes, jusqu'à $10^5$ lux en plein soleil. C'est à l'intérieur de ce domaine $D_{scene}$ que se déplace la fenêtre d'observation $D_{obs}$. La vitesse de translation de $D_{obs}$ est relativement lente et s'effectue après intégration de la lumière. C'est l'adaptation oculaire. Il faudra quelques secondes pour un décalage de 2 bits (par exemple regarder sur son bureau et sous son bureau) et plusieurs minutes pour un décalage de 10 bits (par exemple bureau éclairé et observation d'une étoile lointaine).

L'oeil se comporte donc comme un senseur dont la capacité en mode d'entrée différentiel est caractérisée par une dynamique de 200 et une bande passante très élevée et dont la capacité en mode d'entrée commun est de $10^7$ et la bande passante très faible.

Lors de l'observation d'images artificielles, l'oeil ne bouge plus ou presque et reçoit une information lumineuse sensiblement constante et saturée en valeur de $L_{max}$ . Alors $D_{obs}$ est très peu différente de $D_{scene}$. De telles images sont produites par un téléviseur domestique ($L_{max}$ = 100 Cd/m$^2$ ) ou un visuel de signalisation ($L_{max}$ varie de 3 à 10 CD/m$^2$. Dans un cas comme l'autre le système de restitution d'images a une capacité de synthèse en luminance à dynamique réduite et l'oeil perd sa capacité d'accomodation aux grandes variations de luminance. Il ne pourra travailler qu'avec sa dynamique instantanée statique qui sera le plus souvent limitée par le contraste de la restitution d'images (de 10 à 200). Pour avoir une meilleure simulation et un contraste optimal, l'adaptation de l'oeil aux variations importantes de $L_{max}$ (source) devra donc se faire en amont, c'est-à-dire au sein de la génération d'images.

Dans la télévision de tous les jours, cette fonction de recadrage est différente selon le type de traitement de l'image. A la source, c'est le cameraman qui corrige par des filtres, son iris ou un éclairage d'appoint sa prise de vue. Ensuite, et au fur et à mesure des traitements vidéo, ce sont soit d'autres opérateurs (monteurs, mixeurs, ...) soit des automatismes (AGC) qui contrôlent et maintiennent ces corrections. Ce qui fait que quand on utilise un vidéodisque, un magnétoscope, ou encore la simple antenne de réception TV domestique, le signal vidéo a une amplitude normalisée. Sa valeur crête est constante. Dans tous ces dispositifs, quand on regarde le soleil ou quand on lui tourne le dos, quand on lit une feuille de papier le jour ou quand on regarde un lampadaire la nuit, l'image apparaît de la même qualité. Pourtant, à l'origine de la scène ou de la prise de vue, les éclairements pour un même blanc perçu différeraient dans des rapports supérieurs à 100. L'ingénieur de la vision, l'iris de l'objectif du cameraman ou l'AGC de l'enregistreur ont corrigé ces variations de façon à ce qu'en sortie de régie le signal vidéo du blanc soit toujours de 700 mV et celui du noir soit toujours de 50 mV à quelques nuances près. Cela ne veut, bien sûr, par dire que toutes les images vont se ressembler. A l'intérieur de cette plage la distribution du signal peut être différente. Elle sert à renseigner sur les conditions de la scène. Si l'on souhaite nuancer un effet comme une nuit profonde ou un éblouissement alors la scène est artificiellement bleuie ou jaunie et la distribution de son contraste manuellement modifiée. Mais dans presque tous les cas le signal vidéo reste normalisé.

Dans la génération d'image synthétique et la simulation, le problème est différent de la télévision commerciale dans la mesure où l'opérateur humain n'existe plus. Le signal vidéo n'est plus le résultat d'une mesure mais de celui d'un calcul. Ce dernier est effectué sur la base d'équations sur lesquelles sont apportées différentes corrections destinées à remplacer certains paramètres impossibles à calculer en temps réel. Il en est ainsi de la "radiosité", terme incluant entre autres les contributions de calcul de la diffusion dans l'atmosphère et des réflexions interfacettes, simplement simulé par un terme constant de "luminosité ambiante".

Le problème de fond avec ce calcul est qu'il ne dépend pas de la direction du regard et de l'intégration de l'oeil et comme il n'y a aucun opérateur pour le corriger en temps réel, il n'a aucune chance d'être "oculairement adapté".

Ainsi pour passer dans le format des 8 bits vidéo une luminance dont la dynamique va du soleil à la pénombre, le calcul fait l'objet de différentes compressions limitant par principe son excursion et le contraste. C'est parce que ces traitements sont fixes, dans une certaine mesure empiriques et dépendants du système de restitution d'image sur lequel ils ont été mis au point, que l'image est parfois belle, parfois laide.

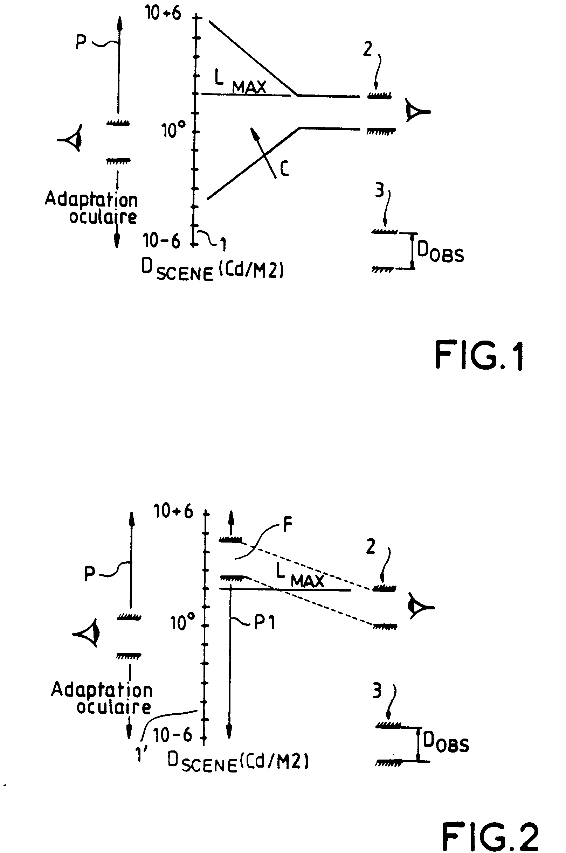

On a représenté sur le diagramme de la figure 1, en 1, une échelle logarithmique, et sur sa gauche les limites, en $Cd/m^2$, de la dynamique ($D_{scene}$) vraie de l'oeil d'un observateur (à gauche) pris dans la réalité. A droite, en 2, la dynamique obtenue après compression (C) dans un générateur synthétique d'images (pour être exprimée en 8 bits, c'est-à-dire dans un rapport de 1 à 256). La dynamique 2 correspond à la dynamique 3 ($D_{obs}$) qui est la dynamique instantanée statique de l'oeil d'un observateur.

Selon l'invention, et ainsi que schématiquement illustré en figure 2, on synthétise dans le processeur de sortie du générateur synthétique d'images l'accomodation de l'oeil aux variations de luminance d'une scène. La mise en oeuvre de ce procédé se traduit par l'ajout d'un diaphragme automatique, en général multicanaux. Ainsi, on adapte le visuel en fonction d'un critère d'observation (valeur crête ou énergie d'un signal) de façon à produire une image dont le contenu soit toujours cadré au maximum de contraste, c'est-à-dire que la dynamique dans laquelle on déplace $D_{obs}$ est égale à la dynamique maximale du système de génération d'images. Pour y parvenir, on supprime les compressions de luminance habituellement actives dans les systèmes actuels (compressions portant sur des valeurs d'offsets, de saturation de variables, ...). Puis, on effectue un calcul de luminosité vraie, de préférence avec un calculateur fonctionnant en virgule flottante (pour assurer le maximum de dynamique, par exemple une dynamique d'au moins 24 bits. Ensuite, on inclut dans le programme de traitement du générateur synthétique d'images la fonction d'adaptation de l'oeil. Enfin, on pondère le signal de correction résultant des étapes précitées par des corrections supplémentaires spécifiques telles que le contenu énergétique d'autres fenêtres du visuel et des informations externes de forçage (scènes de nuit, de crépuscule ou conditions météorologiques ...). La fonction d'adaptation de l'oeil est obtenue par le calcul de l'énergie lumineuse vraie de sortie du générateur, puis intégration de cette énergie en fonction du temps et/ou des distributions de valeurs crêtes, puis normalisation des composantes de sortie vidéo en fonction de l'énergie d'image et de la dynamique possible du système de restitution d'images.

On a représenté en figure 2, en 1' sur une échelle graduée logarithmiquement la dynamique vraie $D_{scene}$, à gauche la plage P d'adaptation oculaire (de $10^5$ à $10^{-6}$ $Cd/m^2$ environ), et à droite la plage P1 d'adaptation du générateur synthétique d'images muni du dispositif de l'invention (P1 est sensiblement égal à P), avec une "fenêtre" F qui se déplace sur toute la plage P1, la dynamique de cette fenêtre F étant pratiquement égale à la dynamique instantanée statique $D_{obs}$ de l'oeil de l'observateur.

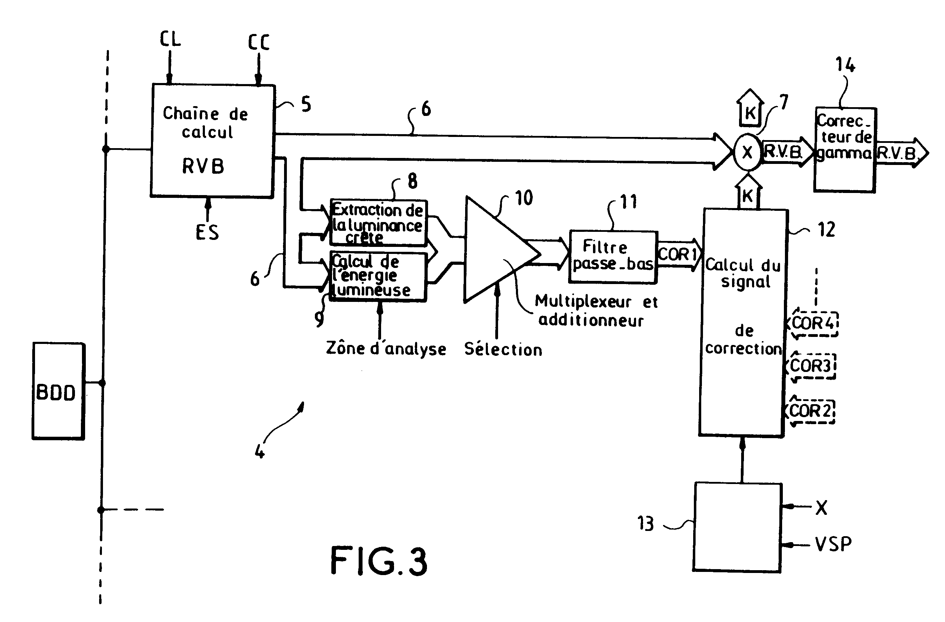

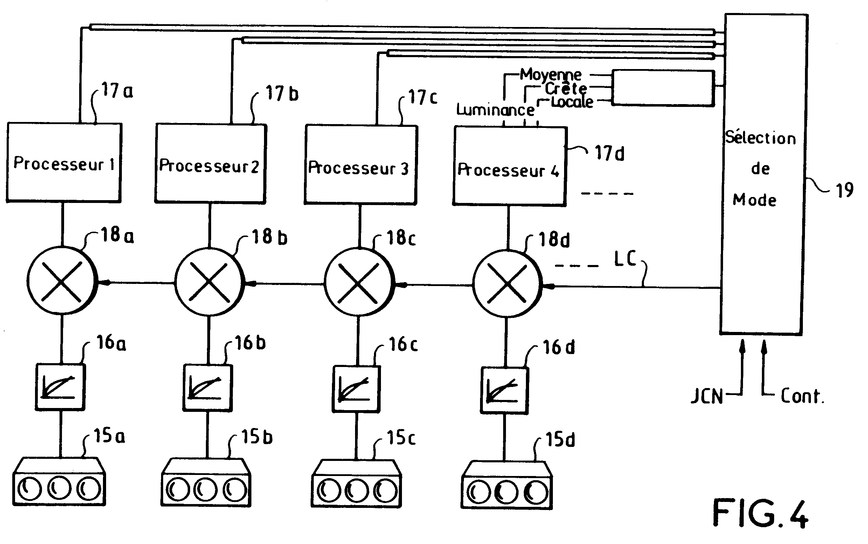

On a représenté en figure 3 le bloc diagramme d'un canal de calcul 4 du générateur synthétique d'images conforme à l'invention. Ce canal 4 est relié, ainsi que tous les autres canaux analogues (non représentés) à une banque de données centrale BDD. Chaque canal est relié à son propre dispositif de visualisation (tel que l'un des dispositifs 15a à 15d décrits ci-dessous en référence à la figure 4). Ce canal 4 comporte un calculateur 5 de valeurs primaires (RVB) à partir d'informations CL de composantes de luminosité des différents canaux de l'image, de composantes colorimétriques CC de surfaces et d'informations ES d'effets spéciaux (textures, brouillard, sources lumineuses intenses, ...). Ces effets spéciaux peuvent être simulés au mieux en réalisant l'intégration de luminance selon des critères de champs ou de distributions lumineuses, par exemple intégration sur la totalité du champ, ou sur 10% du champ à partir du centre, prise en compte d'une détection crête de blanc. Le bus de sortie 6 du calculateur 5 est relié d'une part à un multiplieur 7, et d'autre part à un circuit 8 d'extraction de luminance crête (permettant de déterminer d'éventuels éblouissements lorsque les valeurs crête dépassent un niveau déterminé) et à un circuit 9 de calcul de l'énergie lumineuse des images avant corrections (permettant d'effectuer des pondérations similaires aux réactions de l'oeil) recevant une information de zône d'analyse. Les circuits 8 et 9 sont suivis d'un multiplexeur-additionneur 10 et d'un filtre passe-bas 11 dont la fonction est de simuler la constante de temps d'accomodation de l'oeil. Le signal de sortie du filtre 11 est envoyé, en tant que premier signal de correction (COR1), à un circuit 12 de calcul de signal de correction, qui reçoit par ailleurs d'autres signaux de corrections COR2, COR3, COR4,... Ces signaux de corrections sont fournis par lesdits autres canaux similaires au canal 4. Le circuit 12 est relié à un autre calculateur 13 de calcul de correction en fonction de la valeur de cadrage X choisie à partir des caractéristiques de contraste moyen propres au système de restitution d'images. La valeur de X peut par exemple aller de 5 à 8 bits en fonction du système de restitution d'images utilisé. La correction du cadrage s'effectue sur la luminance seule, et de façon lente (simulation du temps de réaction de l'oeil). Le circuit 12 reçoit également une information VSP de condition de vision : vision scotopique (nocturne) ou photopique (diurne). Les circuits 12 et 13 sont communs à l'ensemble des canaux.

Le circuit 7 transmet le signal commun de correction K (portant, de préférence sur les composantes R, V, B) élaboré par le circuit 12 aux autres processeurs vidéo du système relatifs chacun à un système de visualisation, et représentés en figure 4.

Le circuit 7 transmet également le signal du bus 6, corrigé par les corrections K élaborées par le circuit 12, sous forme RVB via un circuit 14 de correction (correction de "gamma") de linéarité optionnel au dispositif de restitution d'images (non représenté). Ce dispositif de restitution recoit ainsi un signal à faible dynamique instantanée statique, cette dynamique pouvant se déplacer, avec une constante de temps proche de celle de l'oeil (grâce au filtre 11) dans toute la dynamique possible ( de $10^{-6}$ à $10^5$ Cd/m$^2$ environ).

On notera qu'au moins une partie du calcul vidéo sur la luminance peut être effectuée à l'extérieur du générateur synthétique d'images, par exemple dans le calculateur central du simulateur, ce dernier envoyant alors à tous les canaux du générateur d'images un signal commun de correction. On peut ainsi simplifier les échanges d'informations entre ces différents canaux.

On a schématiquement représenté en figure 4 un visuel à plusieurs canaux de production d'images. Ce visuel comprend plusieurs dispositifs de visualisation d'images 15a, 15b, 15c, 15d,... qui sont dans le cas présent des projecteurs trichromes. Chacun d'eux est précédé d'un circuit 16a, 16b, 16c, 16d,...respectivement, de correction de linéarité (correction "gamma"). Chaque canal comporte son propre processeur vidéo 17a, 17b, 17c, 17d,...relié au circuit 16i (i=a, b, c,...) correspondant par un multiplieur 18a, 18b, 18c, 18d,.... Les différents processeurs 17i sont commandés par un circuit 19 de sélection de mode (luminance moyenne, crête, ou locale) recevant des informations (cont) de contraste désiré et des informations JCN conditions générales d'éclairement (jour, nuit, ou crépuscule). Le circuit 19 envoie aux circuits 18i un signal LC de luminance et de chrominance.

Dans ce visuel multi-fenêtres, le critère d'intégration simulant l'oeil est pris sur l'un des processeurs et envoyé à l'ensemble des autres processeurs, de façon à garantir l'homogénéité du visuel. La sélection du canal de référence de luminance peut par exemple se faire en choisissant, parmi les blancs maximum des différentes fenêtres celui qui a la plus forte valeur crête, ou bien la luminance d'une fenêtre fixe prédéterminée (par exemple la fenêtre centrale) ou bien la fenêtre se situant dans l'axe d'observation de l'utilisateur (en utilisant avantageusement un dispositif de détection de la position de la tête de l'utilisateur, ou la plus forte valeur parmi les luminances moyennes des différentes fenêtres.

Le dispositif de l'invention permet une correction globale de l'image visualisée. Ainsi, par exemple, si sur l'un des canaux (ou partie de l'image visualisée) une surface éblouissante apparaît (phare puissant, soleil, ...), alors que la luminance des autres canaux est de valeur moyenne, on ne peut augmenter suffisamment la luminance pour restituer cet éblouissement (on arrive vite à la saturation en luminance du sytème de restitution d'images), et, selon l'invention, on diminue la luminance de tous les autres canaux (action du circuit 13), tout en augmentant la luminance du canal ébloui jusqu'à sa valeur maximale possible.

## Revendications

1. Procédé d'augmentation de contraste d'un générateur d'images synthétiques, caractérisé par le fait que l'on produit des images avec une dynamique sensiblement égale à la dynamique vraie de l'oeil, et que l'on envoie au système de restitution d'images un signal dont la position de la dynamique de luminance instantanée est sensiblement égale à la dynamique instantanée statique de l'oeil.

2. Procédé selon la revendication 1, caractérisé par le fait que l'on fait varier la dynamique de luminance instantanée du signal envoyé au système de restitution d'images avec une constante de temps sensiblement égale à celle de l'oeil.

3. Procédé selon l'une des revendications précédentes, appliqué à un système de restitution multi-canaux, caractérisé par le fait que l'on envoie à tous les canaux un même signal de commande de dynamique de luminance instantanée.

4. Procédé selon la revendication 3, caractérisé par le fait que ledit signal de commande est prélevé sur l'un des canaux servant de canal de référence.

5. Procédé selon la revendication 4, caractérisé par le fait que le canal de référence est choisi en fonction de l'un des critères suivants : blanc crête maximum, canal fixe prédéterminé, canal correspondant à l'axe d'observation de l'utilisateur, plus grande valeur moyenne de luminosité.

6. Générateur d'images synthétiques à contraste augmenté, caractérisé par le fait qu'il comporte un canal principal (6) sans compression de luminance et un circuit de calcul de correction (8 à 13) cadrant la luminosité du canal principal.

7. Générateur selon la revendication 6, caractérisé par le fait que le circuit de calcul de correction comporte un circuit (8) d'extraction de luminance crête et un circuit (9) de calcul d'énergie lumineuse.

8. Générateur selon la revendication 6 ou 7, caractérisé par le fait que le circuit de calcul de correction comporte un filtre passe-bas (11).

FIG.1

FIG.2

EP 0 504 021 A1

CL    CC

14

Chaîne de
calcul

RVB

5

6

7
K

Correcteur de
gamma

X
R.V.B

R.V.B

ES

8

Extraction de
la luminance
crête

10

11

Filtre
passe-bas

COR1

12

Calcul du
signal

de
correction

COR4

COR3

COR2

6

Calcul de
l'énergie
lumineuse

9

Multiplexeur et
additionneur

K

Zône d'analyse    Sélection

4

BDD

13

X

VSP

FIG.3

FIG.4

EP 0 504 021 A1

**Office européen des brevets**

# RAPPORT DE RECHERCHE EUROPEENNE

Numero de la demande

EP    92 40 0586

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 629 658 (THOMSON-CSF) 6 Octobre 1989<br>* page 3, ligne 1 - page 4, ligne 21; figures 4-8 *<br>--- | 1 | H04N5/20 |
| A | EP-A-0 228 936 (ETAT FRANCAIS)<br>* page 3, ligne 16 - ligne 52 *<br>* page 4, ligne 20 - ligne 51; figures 4,5 *<br>----- | 1-3 | |

**DOMAINES TECHNIQUES RECHERCHES (Int. Cl.5 )**

H04N
G06F
G09G

Le présent rapport a été établi pour toutes les revendications

| Lieu de la recherche | Date d'achèvement de la recherche | Examinateur |
|---|---|---|
| LA HAYE | 11 MAI 1992 | VAN DER ZAAL R. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.......................................................................................
& : membre de la même famille, document correspondant

EPO FORM 1503 03.82 (P0402)

9